# EUROPEAN PATENT SPECIFICATION

(11) **EP 3 172 867 B1**
(45) Date of publication and mention of the grant of the patent: **29.07.2020**
(21) Application number: 14855509.7
(22) Date of filing: 27.10.2014
(51) Int. Cl.: H04L 12/715, H04L 12/28, H04L 12/58, H04L 29/12, H04L 29/08, H04L 12/46, H04L 29/06

(54) **NETWORK ARCHITECTURE WITH FIXED ROUTING**
NETZWERKARCHITEKTUR MIT FESTER LEITWEGLENKUNG
ARCHITECTURE RÉSEAU AVEC ROUTAGE FIXE

(30) Priority: 25.10.2013 US 201361962311 P; 06.01.2014 US 201461923829 P
(43) Date of publication of application: 31.05.2017
(73) Proprietor: Li, Lei, Hershey, PA 17033 (US)
(72) Inventor: Li, Lei, Hershey, PA 17033 (US)
(74) Representative: Maiwald Patent- und Rechtsanwaltsgesellschaft mbH
(86) International application number: PCT/US2014/062405
(87) International publication number: WO 2015/061781

(56) References cited:
- EP-A1- 1 791 308
- WO-A2-2010/144372
- US-A- 6 069 945
- US-A1- 2003 131 073
- US-A1- 2003 152 092
- US-A1- 2003 177 356
- US-A1- 2006 089 140
- US-A1- 2010 146 432

## Description

### Field of the Invention

01 The present invention is directed to the architecture of a new personal computer network (PCN 100) to networking personal computers globally. The network 100 has architecture with local operating system 18, regional operating system 20 and global operating system 24 to network the personal computer users 10 in the areas and connects the computer users 10 globally. With the architecture, the network has fixed routing to transfer the information. The network will provide us with a secure and efficient computer environment.

### Background of the Invention

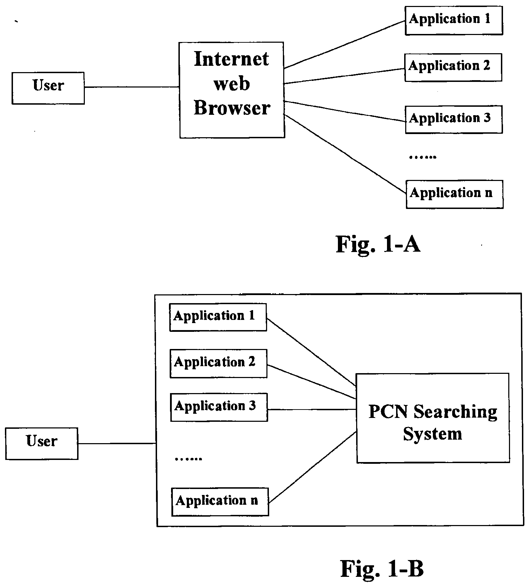

02 The proposed PCN 100 differs from the Internet in that all computer users 10 are connected to the same network 100 (shown as Fig. 1).

03 PCN 100 is a closed network. The user is connected to operating system of the network 100. The operating system is installed in the central building and distributed globally. All the operating systems in the global are identified with the country code and area code.

04 The operating systems are defined as Local operating systems 18, Regional operating systems 20 and Global operating systems 24 to connect the computer users 10, business information servers globally and transfer data through the network 100.

05 One of most important advantages of this design includes that the PCN 100 is able to have fixed routing. Besides, PCN 100 provides us with a high security network, an easy expanding and extending structure, and high efficient performance. PCN 100 applies a simplified architecture to provide a sophisticated data network.

05a US 2003/152 092 A1 discloses a multilevel hierarchical addressing and routing mechanism for high-speed Internet. The mechanism enables an Internet router to make its packet forwarding decision based on a short, fixed-length block of the IP address. This speeds up the lookup in the routing table especially for the new IPv6 protocol where a full IP address is 128 bits long.

### Summary of the Invention

05b The invention is defined by the appended claims. Embodiments and examples not covered by the claims are presented to illustrate, and facilitate the understanding of, the claimed invention.

06 The computer users 10 are connected to operating systems of the Personal Computer Network 100 through gateway routers. The operating systems are distributed globally and installed in the central buildings to network local computer users 10; operating systems are defined as Local operating system 18, Regional operating system 20 and Global operating system 24. All the applications and their business information servers are connected to operating systems. All the operating systems in the network 100 are identified by the country code and area code which are defined by the developer and approved by the international authorization.

07 All the elements in the network have their permanent identification numbers, except computer users 10 and business information servers in the network 100. The elements' identification numbers are defined by the developer and approved by the international authorization.

08 With the identification numbers, all the elements' addresses are determined.

09 With determined addresses, architecture of the network and the rules of fixed routing, the fixed routing to transfer the data is established in the PCN network 100.

10 The features of the network 100, including the architecture of the network 100 and fixed routing in the network 100, result in high secure and efficient performance of the network 100.

### Brief Description of the Drawings

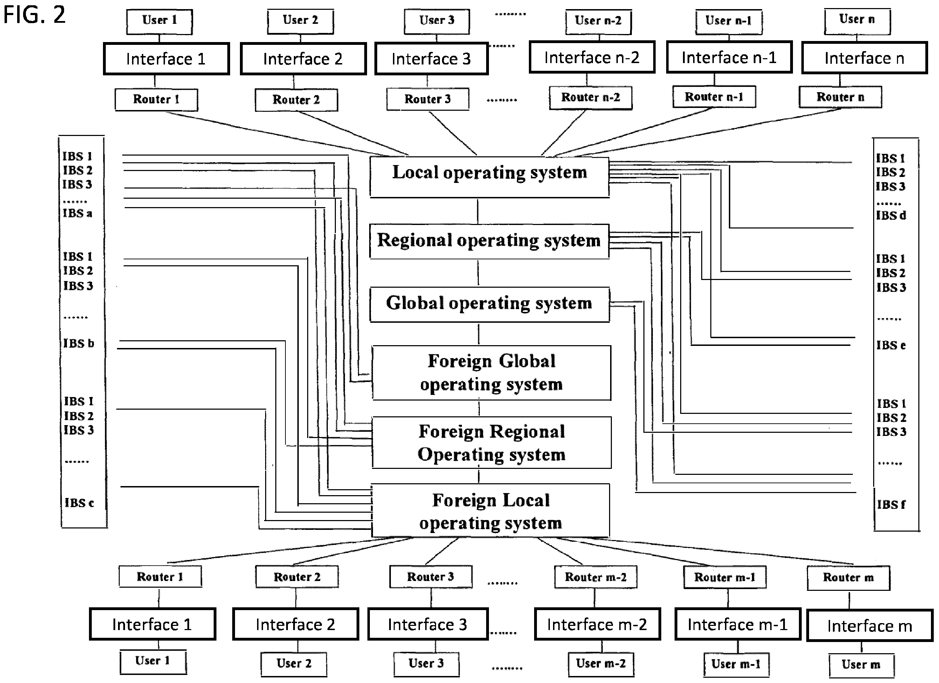

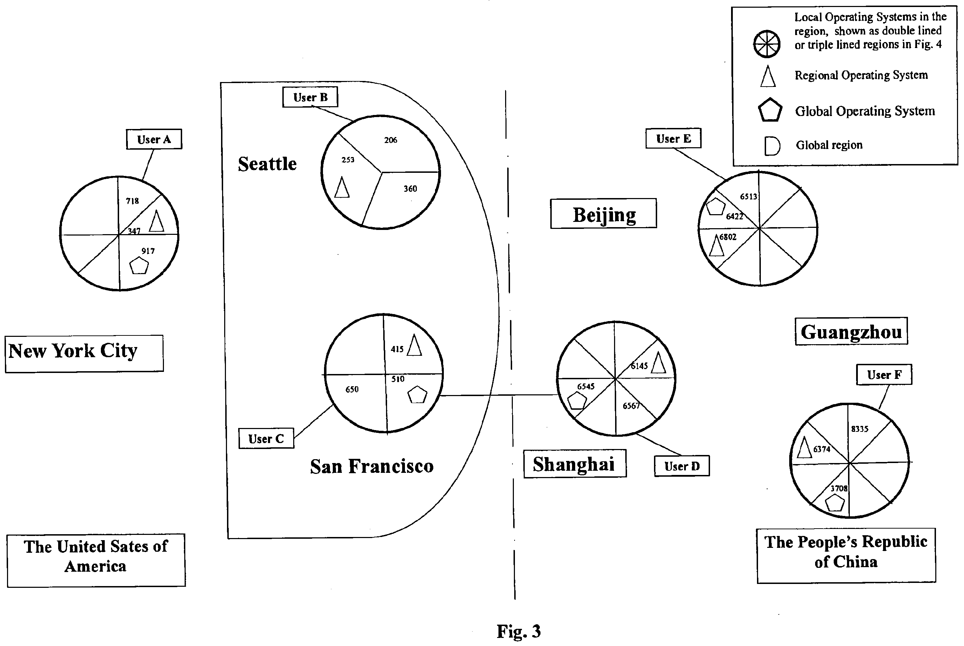

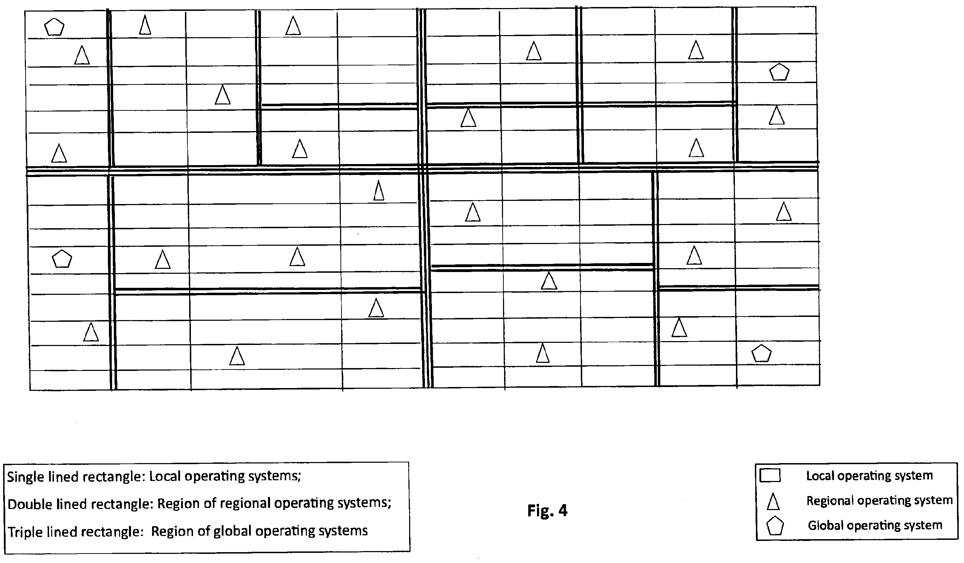

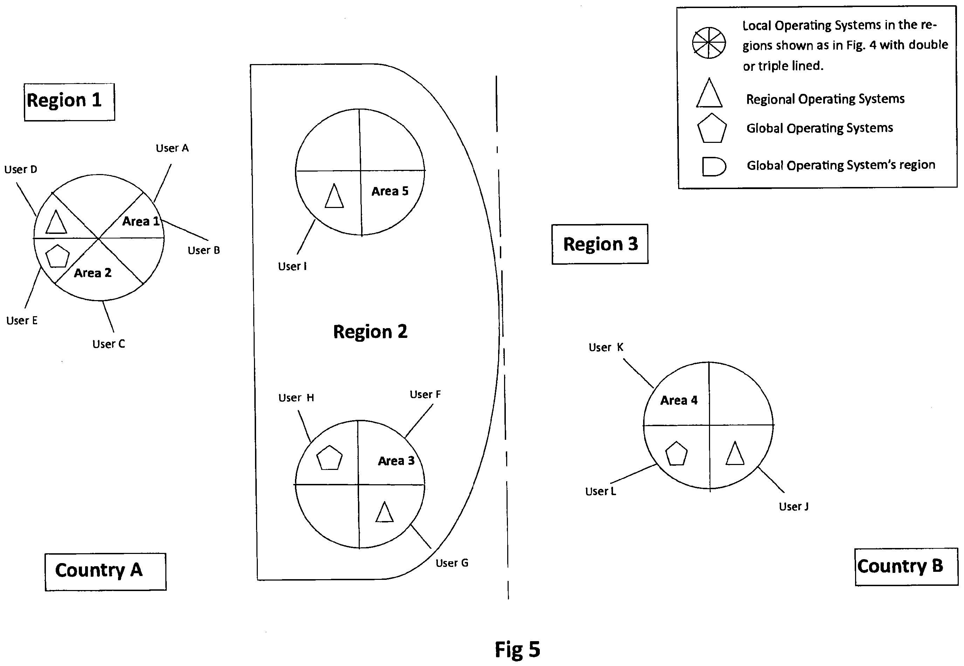

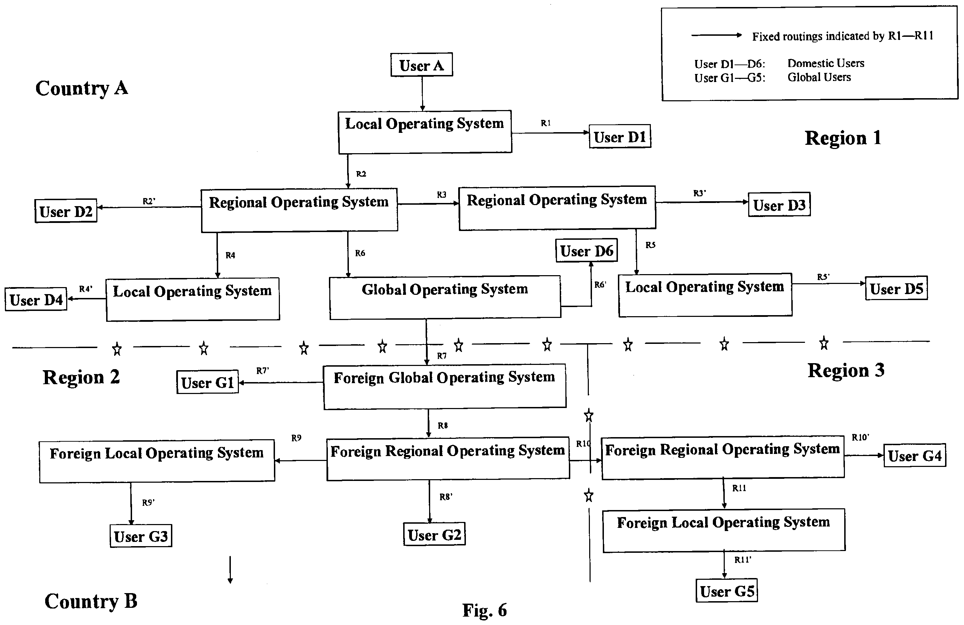

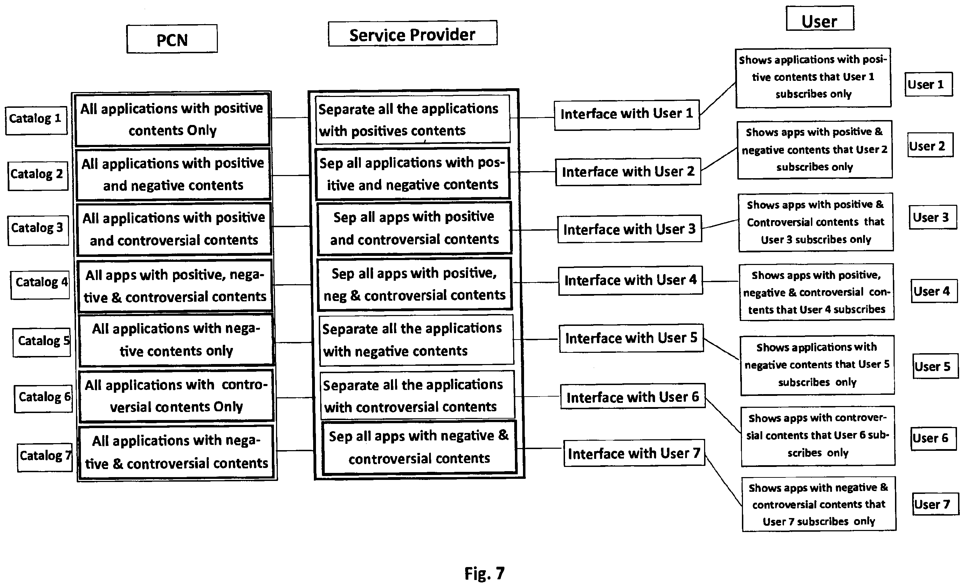

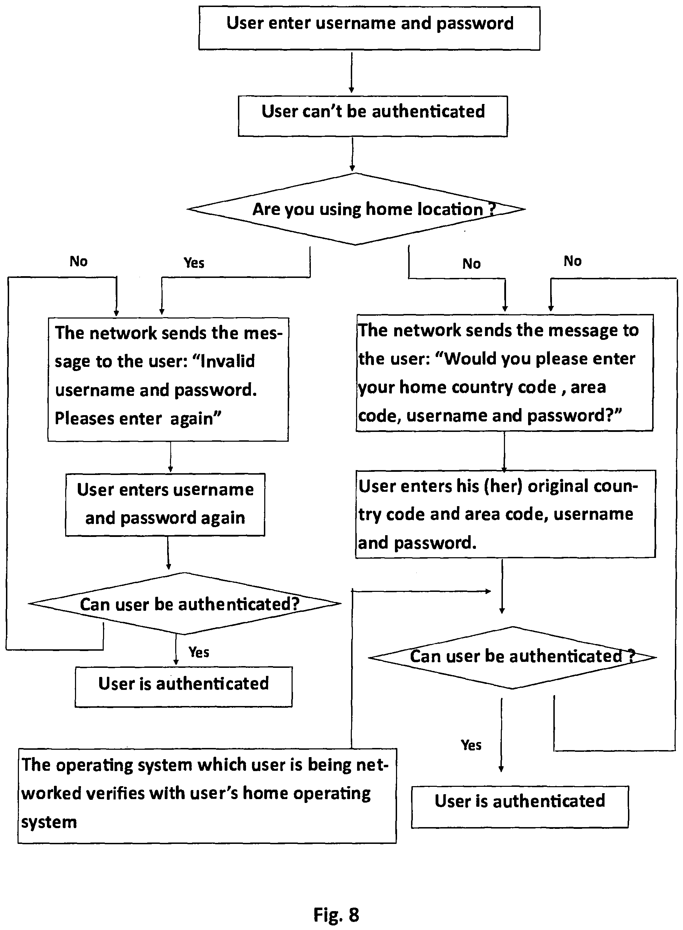

11 FIG. 1 indicates the different connections for the applications between the Internet 11 and PCN 100.
12 FIG. 2 shows a group of individual computer users 10 and Individual Business Information Servers networked to the Personal Computer Network (PCN 100) of the present invention.
13 FIG. 3 shows exemplary physical and logic connections for three computer users 10 in each different city in the United States and three computer users 10 in each different city in China and shows Local Operating Systems 18 in the areas, Regional Operating Systems 20 in the regions and Global Operating Systems 24 in global region.
14 FIG 4 indicates the concept of regions and distribution of local operating systems 18, regional operating systems 20 and global operating system 24.
15 FIG 5 indicates the rules of fixed routing with the example of 12 users 10 in three regions and two countries.
16 FIG 6 indicates how emails are delivered by fixed routing in PCN 100 with the example of 12 users 10 located in different locations and connected to local operating systems 18, regional operating systems 20 and global operating systems 24.
17 FIG 7 Indicates how PCN 100, service provider 50 and interface 52 control and manage the contents of the applications in the network 100 and present them to the computer users 10 with what they subscribe.
18 FIG 8 shows a flow chart to indicate how user 10 can login into the network 100 from the location where the country code and area code are different from his original location where he has registered.

### Detailed Description

### Network Architecture

19 PCN 100 architecture is designed to network the personal computer users 10, and to connect the applications, their business information servers, and users to communicate globally. The architecture, including logical connections and physical connections of PCN 100 has been shown as Diagram 1, Diagram 2, and Diagram 3.

20 Referring to FIG 1, PCN 100 is a closed network. The computer users 10 login onto the network 100 with a user name and password.

21 In Internet, all the applications are connected to the network by web browser, and computer users search with an open system interconnection. Unlike Internet, PCN 100 connects all the applications into the network 100 and search in the closed network 100 (shown as FIG 1).

22 As indicated in FIG 2, a group of users 10 are connected to local operating systems 18 of the PCN network 100 through the gateway router 16. The operating systems distributed all over the world are defined as local operating systems 18, regional operating systems 20 and
global operating systems 24 with individual business information servers connected to the operating systems.

23 Local operating system 18, regional operating system 20 and global operating system 24 are defined relatively and functionally. Local operating system 18 is designed to network the computer users 10 in the area; Regional operating system 20 is designed not only to network the computer users 10 in the area, but also to connect the local operating systems 18 in the region and communicate with other regional operating systems 20 in the country and global operating system 24 in the region as well; Global operating system 24 is designed not only to network the computer users 10 in the area, but also to communicate with regional operating systems 20 in the region and global operating systems 24 in the country and across the world.

24 Shown as FIG 4, in a global region indicated in triple lined rectangle, there are many local operating systems 18. Among these local operating systems 18, there are some regional operating systems 20 that their regions are indicated in double lined rectangle in FIG 4. They communicate with local operating systems 18 in single lined rectangle in the region. The global operating system 24 communicates with these regional operating systems 20 in the region. The regional operating systems 20 in the region and outside region can communicate each other in the country. The regional operating system 20 can communicate with local operating systems 20 in the region.

25 This design indicates the concept how local operating systems 18, regional operating systems 20 and global operating systems 24 are distributed in the country. It doesn't have any specific technical meaning.

26 The architecture of PCN 100 can be completed after business information servers, called Individual Business Servers (IBS) are connected to the network 100. The business information servers are developed with their applications and connected to Operating System of PCN 100.

27 Every time when business information server is connected to PCN 100, it will be given a protocol called Network Business Protocol (NBP) to identify the business information in the network 100. NBP is provided not only to identify the business server in the network, but also to increase the security of network 100.

28 As same as business information server, computer user 10 will be given Network User Protocol (NUP) by PCN 100 every time when he (she) connects to the network 100. NUP is different every time when user 10 connects to the network of PCN 100 to identify the user 10 in the network and increase the security of the network 100.

29 Computer users 10 are connected through gateway routers 16 in the network of PCN 100 shown as Fig 2. The user's computer 10 in PCN is essentially equipped with CPUs, memories, interface with PCN and input/output for the usages. It is configured to collaborate with the operating system.

30 The user's computer is configured for user to employ the applications provided by the network 100 and to manage the files provided by the applications.

31 To connect the network 100, the user's computer 10 has an open configuration to be collaborating with the expanding and extension of the network 100. It is shown as follows:
- User Account
   a. allows user 10 to create, change his (her) user name and password;
   b. allows user 10 to check his account information with the service provider;
   c. allows user 10 who has registered into the network 100 to be able to login to the network 100 from any computer (please see flow chart below); network 100 need user's original location where he (she) registers by country code and area code to authenticate the user 10;
- System and Security
   a. allows user 10 to choose the applications 12 that he (she) wants to subscribe;
   b. Allows user 10 to grouping the computers 10 in the family to share files and printer;
   c. allows user 10 to record the activities of the grouping computers 10;
   d. allows user 10 to view the task and status in the network 100;
   e. allows user 10 to communicate with the network 100 (for updates) and the service provider 50;
   f. allows user 10 to backup;
   g. allows user 10 to find the problem and fix it;
- Hardware and Software
   a. allows user 10 to install hardware, such as memories, printer, scanner;
   b. allow user 10 to install software which not associated with the network 100 and can work independently in user's computer 10;
- Appearance and Personalization
   a. allows user 10 to change the resolution, sound and background of the screen. This feature can be linked to the application feature so that user can uses more choices from the network; and finally,
- Applications
   a. allow user 10 to choose the applications to subscribe, that are provided by PCN (all the available applications in the network 100 are managed by the service provider 50 and interface 52 to the user 10);
   b. allow user 10 to use general features of applications (not from the application servers in the network 100) to manage the files and information after using applications in the network 100, such as: open, save, print, exit and so on;
   c. allow user 10 to use software downloaded into the computer 10 which are not associated with PCN 100 in order to keep PCN 100 clean and in good maintenance.

32 The interface 52 between the user computer 10 and the network 100 is designed to provide all the functions of network 100 to users 10. These functions include: how to use the applications provided by the network 100 and how to manage the files provided by the applications.

33 There is a major feature of interface 52 in the network of PCN 100. It is called Network Directory of the PCN network 100. It provides users 10 with a method to find the applications and features of the network. The Network Directory contains database (s) of classified names of applications, which are connected to the applications of operating system of PCN 100.

34 PCN 100 can use technology of file sharing to connect the applications or business information servers to the network.

35 The gateway router 16 is used to connect the user to operating system in the network of PCN 100. Router 16 is used because 1) each user is considered as small sub-network containing the multiple workstations such as surveillance cameras, mobile devices, wireless devices, multiple computer stations, and so on; 2) PCN 100 will be designed and developed to function more efficiently and effectively for all the telecommunications, and router 16 is the right device to be used for the transmission between the user 10 and operating system of PCN 100 to meet the demands.

36 The router 16 is considered as a suitable device to connect the user to PCN 100. It can perform security function and can be properly programmed to accept or reject certain type of incoming and outgoing data packets. The router 16 is expected to work as the first layer to scan the virus, abnormal codes or programs for the security purpose of PCN 100.

37 The most important reason that the router 16 is considered as a suitable device is that we are considering using completely logic methods to network the personal computer users 10 globally. It means that the programs will be developed in operating systems to network the personal computers.

38 When user 10 opens an account with the service provider 50, the account number is permanent and used for PCN to set up user's profile in the network 100. In the beginning, user 10 employs his account number to create the username and password for the network 100.

39 Every time when user 10 gets on the network 100, the user 10 enters his username and password, and PCN 100 verify the username and password with operating system to authenticate the user 10. After user 10 is authenticated, the user 10 will be given Network User Protocol (NUP) to identify the user 10 in the network.

40 Sometimes, user 10 needs to get on the network from the location other than the one where the user 10 opens an account and registers (home location). If the location has both same country code and area code as home location (in the same area) that user 10 registers with the network 100, it will be same for user 10 to login to the network 100.

41 If user 10 wants to get on the network from other location which has different area code or country code, user 10 needs to use home country code and area code, plus username and password to login to the network 100, since the user 10 is registered and profiled by home local operating system 18.

42 FIG 8 has indicated the flow chart how user 10 login to the network 100 from the operating system 18 other than his original.

43 It is PCN 100 another unique function that PCN 100 can record all the performances of the user 10 when the user 10 is in the network 100. It can provide us with a secure computer environment and the informational activities of PCN 100.

44 After the user 100 is authenticated, PCN 100 provides the user 10 with Network User Protocol (NUP) to identify the user 10 in the network 100, and to increase the security of the network 100. PCN 100 can also provide a value to indicate which application is employing. After the user 10 finishes the application and starts a new application, PCN will change the value for the new application until the user 10 logs out the network 100.

45 PCN 100 has a major function which is able to determine a fixed routing for the session of application.

46 The function of fixed routing can be established based on the architecture of PCN 100, the fixed addressing system and the rules of fixed routing. The rules of fixed routing say that: any two local users 10 in same area can exchange the data with their own operating system directly; any two users 10 NOT in same area, but in same region, can exchange the data with their own regional operating system(s) 20; any two users 10 in different region can exchange the data through their regional operating systems 20; any two regional operating systems 20 in the country can exchange the data directly; any regional operating system 20 can exchange the data with all local operating systems 18 in the region; any global operating systems 24 can exchange the data with all regional operating systems 20 in the region; any two global operating systems 24 in the country or in the world can exchange the data directly.

47 The fixed routing per session makes PCN 100 very efficient. The encapsulation can have all the addresses of the routing in the packet with the architecture of PCN 100, fixed addressing system and the rules of fixed routing.

48 With the advantages of PCN 100, we can make the network 100 efficient and convenient as well.

49 For the email service, PCN can make multiple inboxes for email account to receive different kinds of emails into different inboxes, such as personal email inbox, commercial email inbox and so on.

50 PCN 100 can make it more convenient for computer users 10 to search and employ local businesses. We can develop an application, called Local Business. It contains all the local services and business, such as municipal offices, schools, local hospital, medical offices, restaurants, dry cleaning, libraries, shopping centers, movie theaters and local utility company, cable company and computer service provider, and so on. The application of Local Business can be developed with a local DNS inside application, so that their information doesn't need go all over the world for local users 10.

51 However, their information still can be connected to central DNS for global computer users 10 to search.

52 For those small applications and the small business's information, vendors can be employed to develop their applications and provides their services to the PCN users 10 with the manners of management and maintenance, so that PCN 100 can be a very secure, mature and well managed computer network.

### Physical and Logic Connections

53 In FIG 3, we use three users 10 in three cities, New York City 36, Seattle 38, and San Francisco 38 in the United States 42 and three users in three cities, Shanghai, Beijing and Guangzhou in China 40 to indicate how they communicate each other with the physical connections and logic connections in the network 100. As shown in Fig. 3, one of global regions in the United States 42 includes the regions in Seattle 38 and the regions in San Francisco 38, since there is no global operating system 24 in Seattle. It indicates the concept of the distribution of local operating systems 18, regional operating systems 20 and global operating systems 24. They are defined to cover the computer users 10 globally in a proper and efficient manner. It has no technical meanings.

54 Here are the physical and logic connections of these users 10. All the country codes and area codes have no technical meanings:
- User A to User B:: User A connects to local operating system with area code 718; Local operating system 718 connects to regional operating system 347 in same region; regional operating system 347 connects regional operating system 253 in Seattle; regional operating system 253 connects to local operating system 206 in the same region; local operating system 206 connects to its local User B.
It has shown how two users in different region communicate each other. They communicate through their own regional operating systems 20 and their regional operating systems 20 communicate with local operating system 18 in their own regions.
- User B to User D:: User B at 206 connects to regional operating system 253 in the region and regional operating system 253 connected to regional operating system 415 in the region of San Francisco; regional operating system 415 connects global operating system 510 in same region and global operating system 510 connects to foreign global operating system 6545 in Shanghai; then global operating system 6545 connects regional operating system 6145 in the region of Shanghai; regional operating system 6145 connects local operating system 6567 in the region and local operating system 6567 connects to its local user D.
It has shown how two local users go through local operating system 18, regional operating system 20 and foreign regional operating system 28, global operating systems 24 and foreign global operating system 26 and foreign local operating system 30 to communicate each other globally.
- User C to User D:: User C connects to local operating system 650; local operating system 650 connects to regional operating system 415 in the region; regional operating system 415 connects to global operating system 510 in the region; global operating system 510 connects foreign global operating system 6545 in Shanghai, China; foreign global operating system 6545 connects regional operating system 6145 in the region; regional operating system 6145 connects local operating system 6567 in the region and local operating system 6567 connects to its local User D.
It has also shown how two local users go through their local operating system 18, regional operating system 20 and global operating system 24, and foreign global operating systems 26, foreign regional operating system 28 and foreign local operating system 30 to communicate globally.
- User E to User F:: User E connects to local operating system 6513; local operating system 6513 connects to regional operating system 6802; regional operating system 6802 in Beijing connects to regional operating system 6374 in Guangzhou; regional operating system 6374 connects local operating system 8335 in Guangzhou; local operating system 8335 connects it local User F.
It has shown how two users in different region, but same country communicate each other.
They have no technical meanings to define local operating systems 18, regional operating systems 20, global operating systems 24 and their regions shown in Fig. 3. However, it shows us the rules of fixed routing, the physical and logic connections with the fixed routing.

### Fixed Routing

55 The routing in the network of PCN 100 is fixed. It is one of the advantages of network of PCN 100. Fixed routing is established on the architecture of PCN, the fixed addressing system and the rules of fixed routing.

56 All elements in the network 100 will have identification numbers to differ from each other. The identification numbers of the elements are defined by the developer of the network 100 and approved by international authorization.

57 Beside NUP and NBP in the network are different every time when user and individual business information server are connected to the network 100, each element in the network 100, including each server, protocol, even Input/output in headless system will be assigned a permanent identification number by the developer of PCN 100.

58 Same elements of operating system in different locations will have same identification numbers. For example, the identification number of a transmission control protocol in operating system in New York City 36 will be same as the same transmission control protocol in San Francisco 38 and same transmission control protocol in Shanghai, China.

59 With different country code and area code of the locations, the elements in operating system can be identified in the network 100. The identification numbers of elements in the network 100 can be defined by the developer and approved by international authorization. So are the country codes and area codes. Defining the element's identification number can significantly improve the efficiency of the network 100.

60 The identification number will be used for addressing. The addresses of the elements are: country code + area code + identification numbers. In this way, PCN will have a fixed addressing system.

61 In PCN, no any two elements with same country code and area code will have same identification numbers; no two elements with same country code and identification number will have same area code; and no any two elements with same area code and identification number will have same country code. In another word, it is impossible for two elements in PCN to have same identifications and addresses.

62 Fixed routing is established based on the architecture of PCN, fixed addressing and the rules of routing.

63 The rules of fixed routing say that: any two users 10 in same area can exchange the data with their own operating system directly; any two users 10 NOT in same area, but in same region, can exchange the data with their own regional operating system 20; any two users 10 in different regions_can exchange the data through their regional operating systems 20; any two regional operating systems 20 in the country can exchange the data directly; any regional operating system 20 can exchange the data with all local operating systems 18 in the region; any global operating systems 24 can exchange the data with all regional operating systems 20 in the region; any two global operating systems 24 in the country or in the world can exchange the data directly.

64 FIG 5 has indicated the rules of fixed routing with the examples of 12 users in the three regions and two countries. As shown in Fig. 5,
a. any two users 10 in same area can exchange the data with their own operating system directly: User A - User B;
b. any two users 10 NOT in same area, but in same region, can exchange the data with their own regional operating system 20: User A - User D's operating system - User C;
c. any two users 10 in different regions can exchange the data with their own regional operating systems 20: User A- User D's operating system- User G's operating system - User F;
d. any two regional operating system 20 in the country can exchange the data directly: User D - User G, or User D - User I, or User I - User G;
e. any regional operating system 20 user 10 can exchange the data with all the local operating system 18 users 10 in the region directly: User D - User A, or User D - User B, or User D - User C in region 1; User J - User K in region 3.
f. any global operating system 24 can exchange the data with all regional operating systems 20 in the region: User E - User D in Region 1; or User H - User G in Region 2; or User L - User J in Region 3.
g. any two global operating systems 24 in the country or in the world can exchange the data directly: User E - User H in Country A; or User E - User L globally; or User H - User L globally.

65 The fixed routing is determined as per session of application. It is not per packet. In PCN 100, the headers of data packet will have all the addresses at one time, unlike internet that transfers data per packet and add the headers of addresses one by one in the routing. The fixed routing of PCN 100 will have user's address, destination's address and all the addresses in the routing to accomplish the application per session during encapsulation process.

66 The following shows how email is delivered with the fixed routing in the PCN network 100. All the country codes, area codes and email address have no technical meanings. We suppose that the sender User A is in New York, United States with email address 001718 7654321 (country code 001, area code 718 and local email address 7654321) and the receiver User D is in Shanghai, China with email address 002 21 65675432 (country code 002, area code 216567 and local email address 5432) and both users are connected to the local operating system 18. It has shown as User A and User D in Fig. 3

67 In Fig. 6 Fixed Routings of Delivering Emails, it is shown the fixed routing that User A connected to local operating system in Country A sends email to User G3 connected to local operating system in Country B. Here User G3 is same as User D in Fig. 3.

68 After sender User A enters the receiver User D's email address, the email application in operating system of sender User A (country code 001 and area code 718) will determine the fixed routing all the way to foreign global operating system 26 (area code is 6564) in China. Email application in foreign global operating system 26 in China will determine the fixed routing to deliver the email to User D in Shanghai, China (Country code 002 and area code 21 6567).

69 In Fig. 6, it shows that the fixed routing is User A's local operating system 18 - regional operating system 20 (R2) - global operating system 24 (R6) - foreign global operating system 26 (R7) defined in Country A, and foreign global operating system 26 - foreign regional operating system 28 (R8) - foreign local operating system 30 (R9) - User G3 (R9').

70 In Fig. 3, it shows that route R2 (shown in Fig. 6) delivers email from local operating system 718 to regional operating system 347 in the region; the route R6 (shown in Fig. 6) delivers email from regional operating system 347 to global operating system 917 in the region; the route R7 (shown in Fig. 6) delivers email from global operating system 917 to foreign global operating system 6545; the route R8 (shown in Fig. 6) delivers email from foreign global operating system 6545 to foreign regional operating system 6145; the route R9 (shown in Fig. 6) delivers email from foreign global operating system 6145 to foreign local operating system 6567. Finally, the route R9' (shown in Fig. 6) delivers email to User D.

71 For the global transmission, sender's operating system only determines the routing within the country. As soon as the data arrives at foreign global operating system 26, foreign global operating system 26 will continue to determine the fixed routing in receiver's country with the rules indicated above.

72 With fixed routing to transfer data per session of application, the security of PCN 100 can be improved greatly through both physical connection and logic connection.

### The Management and Control of Content of PCN

73 PCN 100 enables the developers and service provider 50, as well as the user 10 to manage and control the contents. PCN 100 enables computer users to choose the applications to subscribe.

74 PCN 100 and service provider 50 can sort all the applications by the contents, and the service provider 50 can organize the applications by separating them individually or in the packages by the content. It enables the users 10 to choose the applications that they want to subscribe.

75 Children can be stopped being exposed to all improper materials and contents that show in internet today. Making computer user choose the applications certainly helps our young generation growing and learning well. The parents of young children can easily keep improper material from their children by choosing the applications to subscribe.

## Claims

1. The logically controlled computer network (100) for logically connecting global computer users (10) and mobile users (10) and providing centralized features and services to the computer users (10), comprising the architecture of:
• global operating systems (24, 26),
• regional operating systems (20), and
• local operating systems (18),
wherein local operating system (18) is designed to logically network computer users (10) in the area, and wherein the routing within the network (100) is fixed so that:
• any two global operating systems (24, 26) can communicate with each other directly in the country or globally,
• any global operating system (24, 26) can communicate with every regional operating system (20) in its country;
• any two regional operating systems (20) within the country can communicate with each other directly,
• any regional operating system (20) can communicate with all local operating systems (18) in the region, and
• any two local operating systems (18) can communicate with each other directly in the region,
wherein, for global transmission of data, the sender's local operating system (18) is configured to only determine the routing within the sender's country, and the global operating system (26) in the receiver's country is configured to determine the fixed routing in the receiver's country,
**characterized in that** the sender's local operating system (18) and the global operating system (26) are configured to include the sender's address, the receiver's address and all the addresses for the routing in the headers of data packets during the encapsulation process, and the sender's local operating system (18) and the global operating system (26) in the receiver's country are configured to determine the fixed routing per session of application, rather than per packet.

2. The network (100) of claim 1, wherein the network (100) is configured as a closed network and all the computer users (10) can only communicate with each other through the closed network (100).

3. The network (100) of any one of claims 1 to 2, further comprising: the interface (52) to provide all the functions of the network (100) to the computer users (10).

4. The network (100) of claim 3, wherein the interface (52) is configured to:
• enable the user (10) to subscribe to, and use, applications (12) in the network, and
• manage files provided by said applications (12).

5. The network (100) of claim 3 or 4, wherein the interface (52) comprises Network Directory of the network (100) that provides the computer users (10) with the method to find the applications and features of the network (100).

6. The network (100) of claim 5, wherein the Network Directory contains the database of classified names of applications which are connected to the applications of operating systems of network (100).

7. The network (100) of any one of claims 1 to 6, wherein each operating system (18, 20, 24) is identified by the country code and the area code.

8. The network (100) of claim 7, wherein each element is addressed by the country code, the area code and the identification number, so that no any two elements with same country code and area code will have same identification numbers, no two elements with same country code and identification number will have same area code, and no any two elements with same area code and identification number will have same country code.

9. The network (100) of any one of claims 1 to 8, further configured to connect the user (10) to the local operating system (18) via the gateway router (16) of the user (10), wherein each user (10) is considered as small sub-network.

10. The network (100) of any one of claims 1 to 9, further comprising the Local Business application (12) containing local services and businesses.

11. The network (100) of claim 10, said Local Business application (12) further comprising the local domain name server, DNS, for local searching (10).

12. The network (100) of claim 11, wherein said Local Business application (12) is still connected to the central DNS for the global computer users (10) to search.

13. The network (100) of any one of claims 1 to 12, further configured to authenticate the user (10) by verifying the username and password entered by the user with the local operating system.

14. The network (100) of any one of claims 1 to 13, configured to record all the performances of the user (10) when the user (10) is in the network (100).

## Patentansprüche

1. Das logisch gesteuerte Computernetzwerk (100) zum logischen Verbinden globaler Computernutzer (10) und mobiler Nutzer (10) und zum Bereitstellen zentralisierter Features und Dienste an die Computernutzer (10), umfassend die Architektur von:
• globalen Betriebssystemen (24, 26),
• regionalen Betriebssystemen (20) und
• lokalen Betriebssystemen (18),
wobei lokales Betriebssystem (18) dazu ausgebildet ist, Computernutzer (10) in dem Gebiet logisch zu vernetzen, und wobei das Routing in dem Netzwerk (100) fest ist, so dass:
• beliebige zwei globale Betriebssysteme (24, 26) direkt in dem Land oder global miteinander kommunizieren können,
• jedes globale Betriebssystem (24, 26) mit jedem regionalen Betriebssystem (20) in seinem Land kommunizieren kann,
• beliebige zwei regionale Betriebssysteme (20) in dem Land direkt miteinander kommunizieren können,
• jedes regionale Betriebssystem (20) mit allen lokalen Betriebssystemen (18) in der Region kommunizieren kann, und
• beliebige zwei lokale Betriebssysteme (18) direkt in der Region miteinander kommunizieren können,
wobei, für die globale Übertragung von Daten, das lokale Betriebssystem (18) des Absenders dazu eingerichtet ist, nur das Routing innerhalb des Landes des Absenders zu ermitteln, und das globale Betriebssystem (26) im Land des Empfängers dazu eingerichtet ist, das feste Routing im Land des Empfängers zu ermitteln,
**dadurch gekennzeichnet, dass** das lokale Betriebssystem (18) des Absenders und das globale Betriebssystem (26) dazu eingerichtet sind, die Adresse des Absenders, die Adresse des Empfängers und alle Adressen für das Routing während des Einkapselungsprozesses in den Headern von Datenpaketen einzuschließen, und das lokale Betriebssystem (18) des Absenders und das globale Betriebssystem (26) im Land des Empfängers dazu eingerichtet sind, das feste Routing pro Anwendungssitzung statt pro Paket zu ermitteln.

2. Das Netzwerk (100) nach Anspruch 1, wobei das Netzwerk (100) als geschlossenes Netzwerk eingerichtet ist und alle Computernutzer (10) miteinander nur durch das geschlossene Netzwerk (100) kommunizieren können.

3. Das Netzwerk (100) nach einem der Ansprüche 1 bis 2, weiterhin umfassend: das Interface (52) zum Bereitstellen all der Funktionen des Netzwerks (100) an die Computernutzer (10).

4. Das Netzwerk (100) nach Anspruch 3, wobei das Interface (52) dazu eingerichtet ist:
• den Nutzer (10) zu befähigen, Anwendungen (12) in dem Netzwerk zu abonnieren und zu benutzen, und
• Dateien, die von besagten Anwendungen (12) bereitgestellt werden, zu verwalten.

5. Das Netzwerk (100) nach Anspruch 3 oder 4, wobei das Interface (52) das Netzwerkverzeichnis des Netzwerks (100) umfasst, das den Computernutzern (10) das Verfahren bereitstellt, die Anwendungen und Features des Netzwerks (100) zu finden.

6. Das Netzwerk (100) nach Anspruch 5, wobei das Netzwerkverzeichnis die Datenbank der klassifizierten Namen von Anwendungen enthält, die mit den Anwendungen von Betriebssystemen des Netzwerks (100) verbunden sind.

7. Das Netzwerk (100) nach einem der Ansprüche 1 bis 6, wobei jedes Betriebssystem (18, 20, 24) durch die Landesvorwahl und die Ortsvorwahl identifiziert ist.

8. Das Netzwerk (100) nach Anspruch 7, wobei jedes Element mit der Landesvorwahl, der Ortsvorwahl und der Identifikationsnummer adressiert ist, so dass keine zwei Elemente mit derselben Landesvorwahl und Ortsvorwahl gleiche Identifikationsnummern haben, keine zwei Elemente mit gleicher Landesvorwahl und Identifikationsnummer die gleiche Ortsvorwahl haben, und keine zwei Elemente mit gleicher Ortsvorwahl und Identifikationsnummer die gleiche Landesvorwahl haben.

9. Das Netzwerk (100) nach einem der Ansprüche 1 bis 8, weiterhin dazu eingerichtet, den Nutzer (10) über den Gateway-Router (16) des Nutzers (10) mit dem lokalen Betriebssystem (18) zu verbinden, wobei jeder Nutzer (10) als kleines Unter-Netzwerk betrachtet wird.

10. Das Netzwerk (100) nach einem der Ansprüche 1 bis 9, weiterhin umfassend die Lokale Geschäftsanwendung (12), die lokale Dienste und Geschäfte enthält.

11. Das Netzwerk (100) nach Anspruch 10, wobei besagte Lokale Geschäftsanwendung (12) weiterhin den lokalen Domänennamenserver, DNS, zum lokalen Suchen (10) umfasst.

12. Das Netzwerk (100) nach Anspruch 11, wobei besagte Lokale Geschäftsanwendung (12) immer noch mit dem zentralen DNS verbunden ist, um von globalen Computernutzern (10) durchsucht zu werden.

13. Das Netzwerk (100) nach einem der Ansprüche 1 bis 12, weiterhin dazu eingerichtet, den Nutzer (10) durch Überprüfung eines Benutzernamens und Passworts, die vom Nutzer beim lokalen Betriebssystem eingegeben werden, zu authentifizieren.

14. Das Netzwerk (100) nach einem der Ansprüche 1 bis 13, dazu eingerichtet, alle Verrichtungen des Nutzers (10) aufzuzeichnen, wenn der Nutzer (10) in dem Netzwerk (100) ist.

## Revendications

1. Le réseau informatique à commande logique (100) pour connecter logiquement des utilisateurs d'ordinateurs mondiaux (10) et des utilisateurs mobiles (10) et fournir des fonctionnalités et des services centralisés aux utilisateurs d'ordinateurs (10), comprenant l'architecture de :
• systèmes d'exploitation mondiaux (24, 26),
• systèmes d'exploitation régionaux (20) et
• systèmes d'exploitation locaux (18),
dans lequel le système d'exploitation local (18) est conçu pour mettre en réseau logiquement des utilisateurs d'ordinateurs (10) dans la zone, et dans lequel le routage au sein du réseau (100) est fixé de sorte que :
• deux systèmes d'exploitation mondiaux (24, 26) peuvent communiquer entre eux directement dans le pays ou à l'échelle mondiale,
• tout système d'exploitation mondial (24, 26) peut communiquer avec chaque système d'exploitation régional (20) dans son pays ;
• deux systèmes d'exploitation régionaux (20) dans le même pays peuvent communiquer entre eux directement,
• tout système d'exploitation régional (20) peut communiquer avec tous les systèmes d'exploitation locaux (18) dans la région et
• deux systèmes d'exploitation locaux (18) peuvent communiquer entre eux directement dans la région,
dans lequel, pour la transmission mondiale de données, le système d'exploitation local (18) de l'expéditeur est configuré pour déterminer uniquement le routage au sein du pays de l'expéditeur et le système d'exploitation mondial (26) dans le pays du destinataire est configuré pour déterminer le routage fixé dans le pays du destinataire, **caractérisé en ce que** le système d'exploitation local (18) de l'expéditeur et le système d'exploitation mondial (26) sont configurés pour inclure l'adresse de l'expéditeur, l'adresse du destinataire et toutes les adresses pour le routage dans les en-têtes de paquets de données pendant le processus d'encapsulation, et le système d'exploitation local (18) de l'expéditeur et le système d'exploitation mondial (26) dans le pays du destinataire sont configurés pour déterminer le routage fixé par session d'application, plutôt que par paquet.

2. Réseau (100) selon la revendication 1, dans lequel le réseau (100) est configuré comme un réseau fermé et tous les utilisateurs d'ordinateurs (10) ne peuvent communiquer entre eux que par le réseau fermé (100).

3. Réseau (100) selon l'une quelconque des revendications 1 à 2, comprenant en outre : l'interface (52) pour fournir toutes les fonctions du réseau (100) aux utilisateurs d'ordinateurs (10).

4. Réseau (100) selon la revendication 3, dans lequel l'interface (52) est configurée pour :
• permettre à l'utilisateur (10) de s'abonner à des applications (12) sur le réseau et de les utiliser, et
• gérer les fichiers fournis par lesdites applications (12) .

5. Réseau (100) selon la revendication 3 ou 4, dans lequel l'interface (52) comprend le répertoire de réseau du réseau (100) qui fournit aux utilisateurs d'ordinateurs (10) la méthode pour trouver les applications et fonctionnalités du réseau (100).

6. Réseau (100) selon la revendication 5, dans lequel le répertoire de réseau contient la base de données de noms classifiés d'applications qui sont reliés aux applications de systèmes d'exploitation du réseau (100).

7. Réseau (100) selon l'une quelconque des revendications 1 à 6, dans lequel chaque système d'exploitation (18, 20, 24) est identifié par le code de pays et le code de zone.

8. Réseau (100) selon la revendication 7, dans lequel chaque élément est adressé par le code de pays, le code de zone et le numéro d'identification, de sorte que deux éléments ayant le même code de pays et le même code de zone n'ont pas le même numéro d'identification, deux éléments ayant le même code de pays et le même numéro d'identification n'ont pas le même code de zone et deux éléments ayant le même code de zone et le même numéro d'identification n'ont pas le même code de pays.

9. Réseau (100) selon l'une quelconque des revendications 1 à 8, configuré en outre pour connecter l'utilisateur (10) au système d'exploitation local (18) via le routeur de passerelle (16) de l'utilisateur (10), chaque utilisateur (10) étant considéré comme un petit sous-réseau.

10. Réseau (100) selon l'une quelconque des revendications 1 à 9, comprenant en outre l'application Local Business (Entreprises locales) (12) contenant des services et entreprises locaux.

11. Réseau (100) selon la revendication 10, ladite application Local Business (12) comprenant en outre le serveur de noms de domaine local, DNS, pour la recherche locale (10).

12. Réseau (100) selon la revendication 11, dans lequel ladite application Local Business (12) reste connectée au DNS central pour que les utilisateurs d'ordinateurs mondiaux (10) puissent effectuer des recherches.

13. Réseau (100) selon l'une quelconque des revendications 1 à 12, configuré en outre pour authentifier l'utilisateur (10) en vérifiant le nom d'utilisateur et mot de passe entrés par l'utilisateur dans le système d'exploitation local.

14. Réseau (100) selon l'une quelconque des revendications 1 à 13, configuré pour enregistrer toutes les actions de l'utilisateur (10) lorsque l'utilisateur (10) est sur le réseau (100).
